# EUROPEAN PATENT SPECIFICATION

(11) **EP 0 776 610 B1**
(45) Date of publication and mention of the grant of the patent: **28.03.2001**
(21) Application number: 96203349.4
(22) Date of filing: 27.11.1996
(51) Int. Cl.: A23L 1/187

(54) **Process for the preparation of bake-stable custard**
Verfahren für die Herstellung von backfähigem Pudding
Procédé pour la préparation d'un flan qui peut être cuit

(30) Priority: 05.12.1995 EP 95203345; 06.12.1995 EP 95203356
(43) Date of publication of application: 04.06.1997
(73) Proprietor: UNILEVER N.V., 3000 DK Rotterdam (NL); UNILEVER PLC, London EC4P 4BQ (GB)
(72) Inventor: De Haas, Geert, Unilever Vlaardingen Lab., 3133 AT Vlaardingen (NL); Ostreicher, Karin, Unilever Vlaardingen Lab., 3133 AT Vlaardingen (NL); Van Wageningen, Johannes, Unilever Vlaardingen Lab, 3133 AT Vlaardingen (NL)
(74) Representative: Boerma, Caroline

(56) References cited:
- CA-A- 2 150 415
- GB-A- 1 225 040
- GB-A- 2 261 805

## Description

Although pasteurized custards are known that can be applied in bakery products, those products have a serious drawback; i.e. those custards are not bake-stable. Therefore those custards cannot be applied in bakery-products that still have to be baked. The main-problem is that the viscosity of the custards becomes too low upon heating which means that the custards will flow away during heating, resulting in unacceptable end-products. When the viscosity is intermediate another problem still occurs, which is that upon baking, the custards boil over during heating. Moreover, the shelflife of pasteurized custards is not long enough to make them acceptable for retail products where a long shelf life normally is required. Another disadvantage of pasteurized products which are on the market now is the presence of food preservatives such as K-sorbate. This kind of preservatives is not always allowed in food products. Still other disadvantages of the prior art custards is the display of syneresis (water-separation), so that the products are unacceptable for the customer after a short storage-time.

In the past, as disclosed in CA-A-2 150 415 a process was proposed for the preparation of sterilized, bake-stable custards comprising
(a) up to 8 wt%, preferably 0.5-6 wt%, and more preferably 2-5 wt%, UHT-stable, modified starch;
(b) 0.01-10 wt% proteins, preferably 0.5-5 wt% milk proteins;
(c) 0.05-6 wt%, preferably 0.1-3 wt% gelling or non-gelling thickener not being a gelling thickener as defined under (e);
(d) 0.001-5 wt%, preferably 0.001-2.5 wt% of a salt that interacts with gelling thickeners;
(e) 0.1-20 wt%, preferably 0.1-10 wt% of a gelling thickener that gels under the influence of salt (d);
(f) 0 - 30 wt% of a sweetener;
(g) 0 - 5 wt% of flavours;
(h) 0 - 5 wt% of colorants;
(i) water and optionally other ingredients.

It was thought that these kind of products should be prepared by a split stream process, according to which the gelling thickeners and the salt that interacts with the gelling thickeners should not be present simultaneously when the phases containing them are subjected to a sterilization treatment.

GB-A-1 225 040 discloses a thickener for use in making cooked food stuff. Said thickener comprises a mixture of at least one starch material that is a rich source of amylose and has an amylose content of at least 35% by weight thereof, with at least one other material that can function as a stabilizer for the amylose-rich starch material after cooking of the blend at a temperature of at least 130 °C. Such a foodstuff may for example be a custard or a pudding made up from a mixture of milk, sugar, colouring and flavouring substances, together with said thickener composition.

GB-A-2 261 805 discloses a process to prepare a packaged, ready to eat pudding having a fat level of from 0-3% comprising the steps of combining a mixture of all ingredients at a temperature of less than 65.5°C, homogenising the mix, heating to a temperature above 129.4°C for a sufficient period of time to sterilize the mix and cook the starch, followed by cooking and packaging the product.

The present invention concerns a much simpler method for the preparation of these bake-stable custards, and so, the invention concerns a process for the preparation of sterilized, bake-stable custards comprising the above ingredients, characterized in that all ingredients are mixed, after which the total composition is subjected to a sterilization treatment at 130-160°C for at least 0.1 sec, but long enough to obtain sterilization, in particular, such a process is a suitable continuous process.

In the present method, a mixture of the gelling thickener and part of the total amount of water to be applied is prepared and the obtained mixture is added to a mixture of the other ingredients. In a further preferred method, the gelling thickener is dissolved in water prior to its addition to the other ingredients. If so desired, the requesting agent (if used) can be present in this mixture or in the mixture 'of other ingredients', or in both.
In a further preferred embodiment, the sterilization treatment is carried out in a surface scraped heat exchanger, a tubular heat exchanger, a plate heat exchanger or autoclave. In the case an autoclave is used, additional care is to be taken that the sterilization process time is kept as short as possible, ie. not longer than necessary to obtain the desired degree of sterilization. It is often required that optimalisation is sought through time and temperature selections. For example, the sterilisation conditions in an autoclave for thick products are optimally chosen to have a somewhat longer time at lower temperature, but care needs to be taken of overproportioning time and temperature.
Although it was found that the process can be carried out as described above, in a preferred embodiment a sequestrant capable of deferring the salt-ion diffusion, such as polyphosphates, pyrophosphates, phosphates, etc., is present. Suitable sequestrants are to be chosen from the group of heat-stable sequestrants. Sodium citrate, tri sodium phosphate and Na₄P₂O₇, for example, were found to be less suitable for the preparation of the sterilized bake stable custards. Na₂H₂P₂O₇ was found to be a very effective sequestrant and is therefore preferred. In the case a sequestrant is used, it was found that by adding it to the mixture of ingredients other than the gelling thickener and part of the water prior to the addition of the gelling thickener, the mixing process is simplified by the mixture being less viscous compared to the addition of the thickener prior to the sequestrant.
In the case no sequestrant is used, it is preferred to use an scraped surface heat exchanger for the sterilization process, as the thickness of the product will increase while sterilizing.
If a sequestrant is used, it was found that any of the known indirect sterilization methods can be used. An example of a sequestrant applicable for such a method is Na₂H₂P₂O₇. Furthermore, it was noticed that the yellow colour of products comprising a sequestrant was better than that of products without it.

As a gelling thickener, it is preferred that at least one of gellan gum, alginate and/or low methoxy pectin is applied, with a further preference for any one of these as the sole gelling thickener being applied.

In order to achieve the correct rheology it is necessary that the products also contain a salt that interacts with the gelling gums. Examples of such salts are salts (organic or inorganic) of Na, K, Ca, Mg or mixtures thereof. Suitable salts are chlorides, carbonates, sulphates and the like. The selection of the salts to be applied will depend on the thickener applied.

For example, in the case gellan gum is applied as the gelling thickener, any of these salts can be used. For alginate and/or low methoxy pectin, calcium and magnesium salts are usually to be applied.
A very suitable source for salts of calcium is the calcium present in milk-products.
The most preferred gelling thickeners are selected from the group consisting of alginate, low methoxy pectin and gellan gum, and mixtures thereof. The alginate preferably are alkali metal salts of alginate. A preferred low methoxy (= LM) pectin has a degree of esterification of 0-50%.

The water to be applied for making the mixture to be prepared can be tap-water in the case the water has a low hardness. This means that the amount of Ca and/or Mg ions present therein should be less than the amount at which a significant raise of viscosity of the gelling thickener in water is obtained. The exact amount of these ions (the hardness of the water) depends on the type and amount of the gelling thickener used. The selection from demineralized water and tap water is made on the basis of the gelling thickener used. For example, if gellan gum is used, demineralized water is applied for preparing the mixture containing the gellan gum. If gellan gum is used, it is further preferred to dissolve it in water having a temperature of at least 60°C, and it is further preferred to completely dissolve the gellan gum. However, if a sequestrant is used, also tap water may be applied, if the hardness of the water is low. If low methoxy pectin is used, it is preferred that little or no Ca-ions are present. For example, if also milk is used in the composition, it is preferred that no salt ions (of the group of the salts that interact with the gelling thickener) other than those present in milk are added. The amounts indicated to the claims thus refer to the total amount of ions present, irrespective of their source. In the case alginate is used, tap or demineralized water can be used. It is preferred to mix or dissolve it with demineralized water. In the case tap water is used with alginate, it is preferred to use a sequestrant, and, further preferred, to use a larger amount of sequestrant compared to the amount needed when demineralized water is applied.

If all ingredients are mixed simultaneously, it is sometimes needed to apply shear forces or strong homogenization to ensure good dispersion of the starch.

With the presently found process, a highly efficient and practical manner for the preparation of a new type of bakery custards in which excellent organoleptic properties are combined with excellent storage properties and with excellent bake-stability is provided.

As the rheology of our custards play an important role in the bake-stability, we prefer our custards to have a G'' (i.e. loss modulus) of at least 20 Pa, preferably at least 30 Pa when measured at 90°C. G'' is as measured by a dynamic measurement, as disclosed in: "Inleiding in de Rheologie by Blom C.S., 1991, Kluwer Techn. Boeken", using a Rheolab MC-100 and applying a frequency of 1 Herz and an amplitude (γ) of 0.02.
For most applications of the bake stable custard of our invention, it is preferred that the bake stable custard has a G'' of at least 40 Pa at 90°C. whereas for some particular applications a firm product is desired: for these applications, a G'' above 75 Pa is preferred, in particular embodiments G'' is preferably higher than 110 Pa at 90°C. This means that the product does not become too liquid for it to be maintained onto the product it was added onto. In its further preferred embodiments, the custard maintains the shape while baking, so that any custard straips, circles or the like can be prepared and baked together with the product onto it was put.

An important component in our custards is the UHT-stable modified starch. In fact UHT-stable modified starches are known components. In our WO 94/04037 (publ. 3.3.1994) we have disclosed the H- and R-groups of modified starches that are known and which are identical with classes E1422 and E1442 of the EEC-classification. Preferred starches are acetylated distarch adipate and hydroxypropyl distarch phosphate.

The proteins that are present can be milk proteins or soy-proteins. It is preferred, however, to use milk proteins. These can be derived from whole milk powder, butter milk powder, skim milk powder or from non-fat milk solids, although also other protein sources can be used.
In addition, water and optionally other ingredients will be present. Such other ingredients suitably are the other components of the milk-protein source, such as lactose present in milk powder.

The gelling or non-gelling thickener is used to adjust the rheology, in particular the G'' of our custards. Useful gelling or non-gelling thickeners can be selected form the group consisting of carrageenan, gelatin, guar gum, hydrolysed or depolymerized guar gum, galactomannan, hydrolysed galactomannan, xanthan gum, gum arabic, gum tragacanth, tara gum, agar, locust bean gum. For this application, the term "gelling or non-gelling thickener" means thickeners not being gelling thickeners that gel under the influence of a salt (d). Hence, components (c) and (e) are not the same.

The other components (sweeteners, colorants, flavours) of our custards are the conventional products that do not contribute to the inventive concept.

In the above process all our ingredients as disclosed for our compositions can be applied.

### EXAMPLE IA

A composition was made by mixing of the following ingredients:

0.6 parts by weight of Sodium alginate (ex Sanofi) were mixed with 29.4 parts by weight of tap water (hardness: 14 degrees German Hardness value) of 60°C.

A second composition was prepared from the following ingredients (amounts are parts by weight)

| | |
|---|---|
| whole milk powder | 7.5 |
| sugar | 15.0 |
| CaCO₃ | 0.009 |
| gelatin (bloom strength 250) | 0.88 |
| Carrageenan ex Sanofi | 0.075 |
| guar gum (depolymerised) | 0.075 |
| UHT-stable mod. starch | 4.0 |
| colorants and flavours | 0.08 |
| water | 42.4 |

Thereto, the CaCO₃ was added to the tap-water (of 60°C), the gelatin, and a dry mix of the milk powder, starch, sugar, carrageenan, locust bean gum and colour were added, after which the remaining ingredients were added and mixed with a Silverson Mixer.
The alginate mix was added to this mix in a weight ratio of 3:7, and thoroughly mixed with an Ultra Turrax.
The resulting product was subjected to an UHT treatment in a scraped surface heat exchanger (sterilisation temperature 134°C, sterilisation time 53.2 sec) so that an F₀-value of about 15 was obtained. The product was light yellow, had a good taste and a slightly long texture. The bake stability was good, the product did not flow much after baking for 30 minutes at 200°C.

### EXAMPLE IB

Example IA was repeated, with the proviso that for making the first composition, 29.3 parts by weight of tap water were used and 0.7 parts by weight of alginate. The recipe and mixture procedures as described for Ex. IA were followed. The resulting product was sterilized as described for Ex. IA. A stiff and smooth product was obtained, the product flow was less than that of Example IA. The yellow colour was similar to that of Example IA.

### EXAMPLE IC

Example IB was repeated, i.e. 29.3 parts by weight of tap water and 0.7 parts by weight of alginate were used, with the proviso that the composition of the second composition comprised

| | |
|---|---|
| whole milk powder | 7.5 |
| sugar | 15.0 |
| CaCO ₃ | 0.009 |
| gelatin (bloom strength 250) | 1.67 |
| Carrageenan ex Sanofi | 0.10 |
| guar gum (depolymerised) | 0.10 |
| UHT-stable mod. starch | 4.0 |
| colorants and flavours | 0.08 |
| water | 42.05 |

Processing and sterilization were carried out as described for Example IA. The product was found to be somewhat harder, the bake stability, ie. flow upon 30 minutes baking was in between that of Example IA and IB. Yellowness of the product was similar to that of product IB.

### EXAMPLE ID

The gelling thickener solution of Example IA was repeated, i.e. 29.4 parts by weight of tap water and 0.6 parts by weight of alginate were used, with the proviso that the composition of the second composition was that as used in Example IC, ie

| | |
|---|---|
| whole milk powder | 7.5 |
| sugar | 15.0 |
| CaCO₃ | 0.009 |
| gelatin (bloom strength 250) | 1.67 |
| Carrageenan ex Sanofi | 0.10 |
| guar gum (depolymerised) | 0.10 |
| UHT-stable mod. starch | 4.0 |
| colorants and flavours | 0.08 |
| water | 42.05 |

Processing and sterilization were carried out as described for Example IA. The product was smooth, and had a good mouthfeel. The bake-stability was similar to that product IB. Yellowness of the product was similar to that of product IA.

### EXAMPLE IIA

A composition was made by mixing of the following ingredients:
0.6 parts by weight of sodium alginate (ex Sanofi) were mixed with 29.4 parts by weight of tap water of 60°C.

A second composition was prepared from the following ingredients (amounts are part by weight)

| | |
|---|---|
| whole milk powder | 7.5 |
| sugar | 17.0 |
| gelatin (bloom strength 250) | 0.88 |
| Na₂H₂P₂O₇ | 0.15 |
| Carrageenan HMR ex Sanofi | 0.075 |
| guar gum (depolymerised) | 0.075 |
| UHT-stable mod. starch | 4.0 |
| colorants and flavours | 0.08 |
| water | 42.4 |

The Gelatin was dissolved in tap water (hardness: 14 degrees German Hardness value), and to this solution, a dry mix of the remaining ingredients was added and mixed with a Silverson Mixer.
The alginate mix was added to this composition in a weight ratio of 3:7, and thoroughly mixed for 5 minutes with an Ultra Turrax mixer.
The resulting product was subjected to an UHT treatment in a Tubular Heat Exchanger (141°C for 10 s) so that an F₀-value of 11.8 was obtained. The product was yellow, smooth and, after whipping, did not comprise a significant amount of air bubbles after packaging. The bake stability was good, the product did not flow after baking for 30 minutes at 200°C. The storability of the product was good.

### EXAMPLE IIB

Example IIA was repeated, with the proviso that for making the first composition, 29.3 parts by weight of tap water were used and 0.7 parts by weight of alginate. The recipe and mixture procedures as described for Ex. IIA were followed.
The resulting product was subjected to an UHT treatment in a Tubular Heat Exchanger (137°C for 13 s) so that an F₀-value of about 6.5 was obtained. The product was yellow, smooth and, after whipping, did not comprise a significant amount of air bubbles after packaging. The bake stability was good, the product did not flow after baking for 30 minutes at 200°C. The storability of the product was good.

### EXAMPLE IIC

Example IIB was repeated, with the proviso that in the second composition, no phosphate was used, and 40.4 parts by weight of tap water were used. The recipe and mixture procedures as described for Ex. IIB were followed. The resulting product was subjected to an UHT treatment in a Tubular Heat Exchanger (137°C for 19 s) so that an F₀-value of about 9.6 was obtained. The product was yellow with a slightly brownish colour, was smooth and, after whipping, comprised a significant amount of air bubbles after packaging. The bake stability was good, the product did not flow after baking for 30 minutes at 200°C. The storability of the product was good.

### EXAMPLE IIIA

A second composition was prepared from the following ingredients (amounts are parts by weight):

| | |
|---|---|
| whole milk powder | 7.5 |
| sugar | 17.0 |
| gelatin (bloom strength 250) | 0.88 |
| Carrageenan ex Sanofi | 0.075 |
| guar gum (depolymerised) | 0.075 |
| UHT-stable mod. starch | 4.0 |
| colorants and flavours | 0.08 |
| water | 40.4 |

The (tap) water of the second composition was heated to 60°C, and added to a Silverson mixer. Thereto, a dry mixture of starch, gelatin, whole milk powder, carrageenan and locust bean gum were added, and thereto, sugar, colorants, milk powder and flavour were added. To the so obtained mixture, the mixture of alginate and tap water was added in a weight ratio of second:alginate mixture 7:3. The resulting product was subjected to an UHT treatment in a scraped surface heat exchanger (sterilisation temperature 134°C, sterilisation time 56 sec) so that an F₀-value of 15.9 was obtained. The product was shiny light yellow, although it was found to be slightly more brown than that of Examples IIIB and IIIC. The product had a good taste and a rich mouthfeel. The bake stability was good, the product did not flow much after baking for 30 minutes at 200°C.

### EXAMPLE IIIB

A composition was made as follows:
0.7 parts by weight of Sodium alginate (ex Sanofi) were mixed with 29.15 parts by weight of tap water (hardness: 14 degrees German Hardness value) of 60°C. and 0.15 parts by weight of Na₂H₂P₂O₇.
A second composition was prepared with the ingredients and amounts as indicated for Example IIIA, using the same preparation process as described for Example IIIA. The sterilization holding time was about 55.6 seconds, the sterilization temperature was about 133.6°C, so that an F₀-value of 13.3 was obtained. The colour was shiny light yellow, had a good taste, was somewhat more smooth in mouthfeel than the IIIA product, and had good storability. The bake stability was similar to that of the Example IIIA product.

### EXAMPLE IIIC

Example IIIB was repeated, with the proviso that for the first composition, 29.2 parts by weight of tap water (hardness: 14 degrees German Hardness value), 0.65 parts by weight of Sodium alginate (ex Sanofi) were mixed with 0.15 parts by weight of Na₂H₂P₂O₇.
The second composition was the same as described for Example IIIB, and prepared and sterilized in the same manner and the same conditions. Colour and taste were highly similar to that of product IIIB, but the product was somewhat softer and less appreciated for baking purposes and for cold use. Storability of the product was good.

## Claims

1. A process for the preparation of a sterilized, bake stable custard comprising
(a) up to 8 wt%, preferably 0.5-6 wt%, and more preferably 2-5 wt%, UHT-stable, modified starch;
(b) 0.01-10 wt% proteins, preferably 0.5-5 wt% milk proteins;
(c) 0.05-6 wt%, preferably 0.1-3 wt% gelling or non-gelling thickener not being a gelling thickener as defined under (e);
(d) 0.001-5 wt%, preferably 0.001-2.5 wt% of a salt that interacts with gelling thickeners;
(e) 0.1-20 wt%, preferably 0.1-10 wt% of a gelling thickener that gels under the influence of salt (d);
(f) 0 - 30 wt% of a sweetener;
(g) 0 - 5 wt% of flavours;
(h) 0 - 5 wt% of colorants;
(i) water and optionally other ingredients,
characterized in that
(I) a mixture comprising the gelling thickener and part of the total amount of water is prepared,
(II) said mixture is then added to a mixture of the other ingredients,
(III) all ingredients are mixed
(IV) the total composition is subjected to a sterilization treatment at 130-160 °C for at least 0.1 sec, but long enough to obtain sterilization.

2. Process according to claim 1, characterized in that the sterilization treatment is carried out in a surface scraped heat exchanger, a tubular heat exchanger, a plate heat exchanger or an autoclave.

3. Process according to any one of claims 1 to 2, characterized in that a heat stable sequestrant capable of deferring the salt-ion diffusion is added to a mixture of the above ingredients, whereby the sequestrant is added prior to the addition of the gelling thickener.

4. Process according to any one of claims 1 to 3, characterized in that in step (I) a mixture also comprising a heat stable sequestrant capable of deferring the salt-ion diffusion is prepared, whereby the sequestrant is added prior to the addition of the gelling thickener.

5. Process according to any one of claims 1 to 4, characterized in that the gelling thickener is selected from the group consisting of alginate, low methoxy pectin and gellan gum.

6. Process according to any one of claims 1 to 5, characterized in that at least one of whole milk powder, butter milk powder, skim milk powder or non-fat milk solids is used as a source of the milk proteins.

7. Process according to any one of claims 1 to 6, characterized in that the UHT-stable modified starch is selected from the R- or H-group modified starches,in particular actylated distarch adipate and hydroxypropyl distarch phosphate.

## Patentansprüche

1. Verfahren zur Herstellung eines sterilisierten, backfähigen Puddings, umfassend:
(a) bis zu 8 Gew.-%, vorzugsweise 0,5 bis 6 Gew.-% und insbesondere 2 bis 5 Gew.-%, UHT-stabile modifizierte Stärke,
(b) 0,01 bis 10 Gew.-% Proteine, vorzugsweise 0,5 bis 5 Gew.-% Milchproteine,
(c) 0,05 bis 6 Gew.-%, vorzugsweise 0,1 bis 3 Gew.-%, gelierendes oder nicht-gelierendes Verdickungsmittel, das kein wie unter e) definiertes gelierendes Verdickungsmittel ist,
(d) 0,001 bis 5 Gew.-%, vorzugsweise 0,001 bis 2,5 Gew.-%, eines Salzes, das mit den gelierenden Verdickungsmitteln eine Wechselwirkung eingeht,
(e) 0,1 bis 20 Gew.-%, vorzugsweise 0,1 bis 10 Gew.-%, eines gelierenden Verdickungsmittels, das unter dem Einfluß von Salz d) geliert,
(f) 0 bis 30 Gew.-% eines Süßungsmittels,
(g) 0 bis 5 Gew.-% Aromen,
(h) 0 bis 5 Gew.-% Färbemittel,
(i) Wasser und fakultativ andere Bestandteile,
dadurch gekennzeichnet, daß
(I) eine das gelierende Verdickungsmittel und einen Teil der gesamten Wassermenge umfassende Mischung hergestellt wird,
(II) diese Mischung dann zu einer Mischung der anderen Bestandteile zugefügt wird,
(III) alle Bestandteile gemischt werden,
(IV) die gesamte Zusammensetzung einer Sterilisationsbehandlung bei 130 bis 160°C für mindestens 0,1 Sekunden, jedoch lange genug zur Erzielung der Sterilisation, unterworfen wird.

2. Verfahren nach Anspruch 1, dadurch gekennzeichnet, daß die Sterilisationsbehandlung in einem Dünnschichtwärmeaustauscher, einem rohrförmigen Wärmeaustauscher, einem Platten-Wärmeaustauscher oder einem Autoklaven durchgeführt wird.

3. Verfahren nach irgendeinem der Ansprüche 1 bis 2, dadurch gekennzeichnet, daß ein wärmebeständiges Maskierungsmittel, das zum Abwenden einer Salzionendiffusion befähigt ist, zu der Mischung der obigen Bestandteile zugefügt wird, wobei das Maskierungsmittel vor der Zugabe des gelierenden Verdickungsmittels zugegeben wird.

4. Verfahren nach irgendeinem der Ansprüche 1 bis 3, dadurch gekennzeichnet, daß in Schritt (I) eine Mischung hergestellt wird, die auch ein wärmebeständiges Maskierungsmittel umfaßt, das zum Abwenden einer Salzionendiffusion befähigt ist, wobei das Maskierungsmittel vor der Zugabe des gelierenden Verdickungsmittels zugefügt wird.

5. Verfahren nach irgendeinem der Ansprüche 1 bis 4, dadurch gekennzeichnet, daß das gelierende Verdickungsmittel aus der aus Alginat, Niedrigmethoxypektin und Gellangummi bestehenden Gruppe ausgewählt wird.

6. Verfahren nach irgendeinem der Ansprüche 1 bis 5, dadurch gekennzeichnet, daß mindestens eines von Vollmilchpulver, Buttermilchpulver, Magermilchpulver oder fettfreien Milchfeststoffen als Quelle der Milchproteine verwendet wird.

7. Verfahren nach irgendeinem der Ansprüche 1 bis 6, dadurch gekennzeichnet, daß die UHT-beständige modifizierte Stärke ausgewählt ist aus der R- oder H-Gruppe modifizierter Stärken, insbesondere acetyliertem Distärkeadipat und Hydroxypropyldistärkephosphat.

## Revendications

1. Un procédé de préparation d'un flan stérilisé, stable à la cuisson comprenant :
(a) jusqu'à 8 % en masse, de préférence de 0,5 à 6 % en masse, et de façon plus préférentielle de 2 à 5 % en masse d'amidon modifié et stable à ultra haute température ;
(b) de 0,01 à 10 % en masse, de préférence de 0,5 à 5 % en masse de protéines de lait ;
(c) de 0,05 à 6 % en masse, de préférence de 0,1 à 3 % en masse d'épaississant gélifiant ou non gélifiant qui ne soit pas un épaississant gélifiant tel que défini en (e) ;
(d) de 0,001 à 5 % en masse, de préférence de 0,001 à 2,5 % en masse d'un qui inter agit avec les épaississants gélifiants ;
(e) de 0,1 à 20 % en masse, de préférence de 0,1 à 10 % en masse d'un épaississant gélifiant se gélifiant sous l'influence du sel (d) ;
(f) de 0 à 30 % en masse d'un agent sucrant ;
(g) de 0 à 5 % en masse d'agents de sapidité ;
(h) de 0 à 5 % en masse de colorants ;
(i)de l'eau et, de façon optionnelle, d'autres ingrédients,
caractérisé en ce que
(I) on prépare un mélange comprenant l'épaississant gélifiant et une partie de la quantité totale d'eau ;
(II) on ajoute ensuite ledit mélange à un mélange des autres ingrédients ;
(III) on mélange tous les ingrédients ;
(IV) on soumet la composition totale à un traitement de stérilisation à 130 - 160°C pendant au moins 0,1 seconde, mais pas suffisamment longtemps pour obtenir la stérilisation.

2. Procédé selon la revendication 1, caractérisé en ce que le traitement de stérilisation est effectué dans un échangeur de chaleur à surface rugueuse, un échangeur de chaleur tubulaire, un échangeur de chaleur à plateau ou un autoclave.

3. Procédé selon l'une des revendications 1 à 2, caractérisé en ce qu'un agent séquestrant stable à la chaleur et capable de retarder la diffusion de l'ion sel est ajouté au mélange des ingrédients ci-dessus, l'agent séquestrant étant ajouté avant que ne soit ajouté l'épaississant gélifiant.

4. Procédé selon l'une des revendications 1 à 3, caractérisé en ce que dans le cadre de l'étape (I), on prépare un mélange comprenant également un agent séquestrant stable à la chaleur et capable de retarder la diffusion de l'ion sel, l'agent séquestrant étant ajouté avant que ne soit ajouté l'épaississant gélifiant.

5. Procédé selon l'une des revendications 1 à 4, caractérisé en ce que l'épaississant gélifiant est sélectionné à partir du groupe composé de l'alginate, de la pectine faiblement méthoxy et de la gomme de gélane.

6. Procédé selon l'une des revendications 1 à 5, caractérisé en ce qu'on utilise en tant que source de protéine de lait l'un au moins des produits suivants : poudre de lait entier, poudre de babeurre, poudre de lait écrémé ou solides de lait non gras.

7. Procédé selon l'une des revendications 1 à 6, caractérisé en ce que l'amidon modifié stable à ultra haute température est sélectionné à partir des amidons modifiés au niveau du groupe R- ou H-, en particulier l'adipate de diamidon acétylé et le phosphate d'hydroxypropyl diamidon.
